# EUROPEAN PATENT APPLICATION

(11) **EP 4 538 861 A1**
(43) Date of publication of application: **16.04.2025**
(21) Application number: 23848989.2
(22) Date of filing: 16.05.2023
(51) Int. Cl.: G06F 8/33

(54) **CODE COMPLETION METHOD AND APPARATUS, AND DEVICE**

(30) Priority: 30.07.2022 CN 202210912454
(71) Applicant: Huawei Technologies Co., Ltd., Shenzhen, Guangdong 518129 (CN)
(72) Inventor: CHEN, Chi, Shenzhen, Guangdong 518129 (CN); ZHANG, Guoan, Shenzhen, Guangdong 518129 (CN)
(74) Representative: Pfenning, Meinig & Partner mbB
(86) International application number: PCT/CN2023/094442
(87) International publication number: WO 2024/027279

(57) **Abstract**

This application provides a code completion method and apparatus, and a device, and relates to the field of computer technologies. The method includes: obtaining a code context of to-be-completed code (801); constructing a code relationship graph, where the code relationship graph includes at least one node corresponding to the code context, a first node corresponding to the to-be-completed code, and at least one connection edge, where the at least one connection edge includes a first connection edge between the first node and a second node in the at least one node (802); obtaining, in an encoding subnet, a graph feature vector of the code relationship graph based on a label of the at least one node, a label of the first node, and a label of the at least one connection edge, where the label of the at least one node includes a code sequence of the code context, and the label of the first node and a label of the first connection edge are preset (803); and obtaining, in a decoding subnet, a code sequence of the to-be-completed code based on at least the graph feature vector (804).

## Description

This application claims priority to Chinese Patent Application No. 202210912454.0, filed with the China National Intellectual Property Administration on July 30, 2022 and entitled "CODE COMPLETION METHOD AND APPARATUS, AND DEVICE", which is incorporated herein by reference in its entirety.

### TECHNICAL FIELD

This application relates to the field of computer technologies, and specifically, to a code completion method and apparatus, and a device.

### BACKGROUND

With development of computer technologies, computer functions are increasingly rich. Therefore, development of computer programs is increasingly important. A programmer usually uses an integrated development environment (integrated development environment, IDE) to develop a software program. The IDE generally includes tools such as a code editor, a compiler, a debugger, and a graphical user interface. The code editor is a tool used by the programmer to input and edit code. The code editor provides a code completion function that can reduce an amount of code input by the programmer and improve code development efficiency. The code completion function means that when the programmer inputs a part of code in a code edit box, the code editor provides at least one predicted subsequent part of code. If the predicted subsequent code meets a requirement of the programmer, the programmer completes the predicted subsequent code into the code edit box.

Currently, in the software development field, there are two mainstream solutions for implementing the code completion function: a solution based on a conventional statistical model and a solution based on deep learning. With development of deep learning, code completion based on deep learning becomes a main research direction in the software development field.

Regardless of which solution is used to implement code completion and recommendation, prediction accuracy of to-be-completed code can be improved only when a code context of the to-be-completed code is better understood.

### SUMMARY

Embodiments of this application provide a code completion method and apparatus, and a device, to improve prediction accuracy of to-be-completed code.

According to a first aspect, a method for performing code completion via a neural network is provided. The neural network includes an encoding subnet and a decoding subnet. The method includes: obtaining a code context of to-be-completed code; constructing a code relationship graph, where the code relationship graph includes at least one node corresponding to the code context, a first node corresponding to the to-be-completed code, and at least one connection edge, where the at least one connection edge includes a first connection edge between the first node and a second node in the at least one node; obtaining, in the encoding subnet, a graph feature vector of the code relationship graph based on a label of the at least one node, a label of the first node, and a label of the at least one connection edge, where the label of the at least one node includes a code sequence of the code context, and the label of the first node and a label of the first connection edge are preset; and obtaining, in the decoding subnet, a code sequence of the to-be-completed code based on at least the graph feature vector.

In this method, the code sequence of the code context and structure information between the code context and the code completion code can be fused into the code relationship graph. In the neural network, the code sequence and structure information between code are further fused to obtain a graph feature of the code relationship graph, so as to depict association semantics between the code context and the to-be-completed code from a plurality of perspectives. The code sequence of the to-be-completed code is predicted based on the graph feature of the code relationship graph. This can improve prediction accuracy of the to-be-completed code.

In a possible implementation, the at least one connection edge further includes a second connection edge, the second connection edge is connected to a third node and a fourth node in the at least one node, a label of the second connection edge is a flow relationship between the third node and the fourth node, and the flow relationship is a control flow and/or a data flow.

In this implementation, structure information between code contexts may be fused into the graph feature of the code relationship graph, so that the structure information between the code contexts is further considered when the association semantics between the code context and the to-be-completed code are depicted. This can further improve prediction accuracy of the to-be-completed code.

In a possible implementation, the obtaining a graph feature vector of the code relationship graph based on a label of the at least one node, a label of the first node, and a label of the at least one connection edge includes: obtaining a feature vector of the at least one node, a feature vector of the first node, and a feature vector of the at least one connection edge based on the label of the at least one node, the label of the first node, and the label of the at least one connection edge; and fusing the feature vector of the at least one node, the feature vector of the first node, and the feature vector of the at least one connection edge into the graph feature vector.

In this implementation, the neural network may be used to separately extract feature information of a node and feature information of a connection edge, and then fuse the feature information of the node and the feature information of the connection edge into graph feature information, so that the graph feature information is fused into a code sequence of the node and structure information between nodes. Therefore, when a code sequence is predicted based on the graph feature information, high accuracy can be obtained.

In a possible implementation, the obtaining a feature vector of the at least one node, a feature vector of the first node, and a feature vector of the at least one connection edge based on the label of the at least one node, the label of the first node, and the label of the at least one connection edge includes: obtaining an initial feature vector of the first node based on the label of the first node; obtaining an initial feature vector of the second node based on a label of the second node; and obtaining an initial feature vector of the first connection edge based on the label of the first connection edge; obtaining the feature vector of the first node based on the initial feature vector of the first node and the initial feature vector of the first connection edge, and obtaining a feature vector of the second node based on the initial feature vector of the second node and the initial feature vector of the first connection edge; and obtaining a feature vector of the first connection edge based on the feature vector of the first node, the feature vector of the second node, and the initial feature vector of the first connection edge.

In this implementation, when the feature information of the node is extracted, the feature information of the connection edge is considered; and when the feature information of the connection edge is extracted, the feature information of the node is considered. This implements fusing between a code sequence of the code and the structure information between the code.

In a possible implementation, the encoding subnet includes a first layer and a second layer, the initial feature vector of the first node and the initial feature vector of the second node are obtained at the first layer, and the initial feature vector of the first connection edge, the feature vector of the first node, the feature vector of the second node, and the feature vector of the first connection edge are obtained at the second layer. The first layer may be a recurrent neural network, and the second layer may be a graph neural network.

In this implementation, feature information of the code sequence may be extracted at the first layer, and feature information of an inter-code structure may be extracted at the second layer. In this way, a quantity of parameters of the neural network may be reduced without sacrificing prediction accuracy.

In a possible implementation, the label of the at least one node further includes a type of the code context in an abstract syntax tree.

In this implementation, the type of the code context in the abstract syntax tree may be fused into the graph feature of the code relationship graph, so that the association semantics between the code context and the to-be-completed code are depicted from more perspectives. This can further improve prediction accuracy of the to-be-completed code.

In a possible implementation, the encoding subnet further includes a third layer; the method further includes: obtaining, at the third layer, a text semantic feature vector of the code context based on text information of the code context, where the text information includes at least one of a method name, a parameter name, a variable name, and a class name in the code context; and the obtaining a code sequence of the to-be-completed code based on at least the graph feature vector includes: obtaining the code sequence of the to-be-completed code based on a feature vector obtained by fusing the graph feature vector and the text semantic feature vector.

In this implementation, a text semantic feature of the code context and the graph feature of the code relationship graph may be fused, and the code sequence of the to-be-completed code is predicted based on a fused feature. This can further improve prediction accuracy of the to-be-completed code.

In a possible implementation, a location of code corresponding to the second node is adjacent to a location of the to-be-completed code.

In this implementation, a structure relationship is established between the to-be-completed code and the adjacent code of the to-be-completed code, and the structure relationship is fused into the graph feature. This can further improve prediction accuracy of the to-be-completed code.

In a possible implementation, the code sequence is a token sequence of code.

A token of code may reflect semantics of the code. The token sequence of the code is used as the code sequence to depict association semantics between code, and the code sequence of the to-be-completed code is predicted based on the association semantics. This can further improve prediction accuracy of the to-be-completed code.

According to a second aspect, a method for training a neural network is provided. The neural network includes an encoding subnet and a decoding subnet. The method includes: obtaining a code context of to-be-completed code; constructing a code relationship graph, where the code relationship graph includes at least one node corresponding to the code context, a first node corresponding to the to-be-completed code, and at least one connection edge, where the at least one connection edge includes a first connection edge between the first node and a second node in the at least one node; obtaining, in the encoding subnet, a graph feature vector of the code relationship graph based on a label of the at least one node, a label of the first node, and a label of the at least one connection edge, where the label of the at least one node includes a code sequence of the code context, and the label of the first node and a label of the first connection edge are preset; obtaining, in the decoding subnet, a predicted code sequence of the to-be-completed code based on at least the graph feature vector; obtaining a prediction loss based on the predicted code sequence and a real code sequence of the to-be-completed code; and updating the neural network to reduce the prediction loss.

In a possible implementation, a quantity of parameters of the neural network is less than 100 million.

In this implementation, the used neural network has a small quantity of parameters, and is a small- and medium-sized model. Therefore, the neural network can be deployed on a code editor side without model compression. This ensures prediction accuracy of the to-be-completed code.

According to a third aspect, an apparatus performing code completion via a neural network is provided. The neural network includes an encoding subnet and a decoding subnet. The apparatus includes: an obtaining unit, configured to obtain a code context of to-be-completed code; a construction unit, configured to construct a code relationship graph, where the code relationship graph includes at least one node corresponding to the code context, a first node corresponding to the to-be-completed code, and at least one connection edge, where the at least one connection edge includes a first connection edge between the first node and a second node in the at least one node; a first obtaining unit, configured to obtain, in the encoding subnet, a graph feature vector of the code relationship graph based on a label of the at least one node, a label of the first node, and a label of the at least one connection edge, where the label of the at least one node includes a code sequence of the code context, and the label of the first node and a label of the first connection edge are preset; and a second obtaining unit, configured to obtain, in the decoding subnet, a code sequence of the to-be-completed code based on at least the graph feature vector.

According to a fourth aspect, an apparatus for training a neural network is provided. The neural network includes an encoding subnet and a decoding subnet. The apparatus includes: an obtaining unit, configured to obtain a code context of to-be-completed code; a construction unit, configured to construct a code relationship graph, where the code relationship graph includes at least one node corresponding to the code context, a first node corresponding to the to-be-completed code, and at least one connection edge, where the at least one connection edge includes a first connection edge between the first node and a second node in the at least one node; a first obtaining unit, configured to obtain, in the encoding subnet, a graph feature vector of the code relationship graph based on a label of the at least one node, a label of the first node, and a label of the at least one connection edge, where the label of the at least one node includes a code sequence of the code context, and the label of the first node and a label of the first connection edge are preset; a second obtaining unit, configured to obtain, in the decoding subnet, a predicted code sequence of the to-be-completed code based on at least the graph feature vector; a third obtaining unit, configured to obtain a prediction loss based on the predicted code sequence and a real code sequence of the to-be-completed code; and an updating unit, configured to update the neural network to reduce the prediction loss.

According to a fifth aspect, a computing device is provided, including a processor and a memory. The memory is configured to store a computer program, and the processor is configured to execute the computer program, to implement the method provided in the first aspect or the method provided in the second aspect.

According to a sixth aspect, a computer storage medium is provided. The computer storage medium stores a computer program, and when the computer program is executed by a processor, the method provided in the first aspect or the method provided in the second aspect is implemented.

According to a seventh aspect, a computer program product is provided, including a program for implementing the method provided in the first aspect or the method provided in the second aspect.

According to the code completion method and apparatus, and the device provided in embodiments of this application, the code sequence of the code context and the structure information between the code context and the code completion code can be fused into the code relationship graph. In the neural network, the code sequence and the structure information between the code are further fused to obtain the graph feature of the code relationship graph, so as to depict the association semantics between the code context and the to-be-completed code from the plurality of perspectives. The code sequence of the to-be-completed code is predicted based on the graph feature of the code relationship graph. This can improve prediction accuracy of the to-be-completed code.

### BRIEF DESCRIPTION OF DRAWINGS

FIG. 1 is a diagram of a structure of a system architecture to which a code completion solution may be applied according to an embodiment of this application;
FIG. 2 is a flowchart of a code completion model training solution according to an embodiment of this application;
FIG. 3A is a diagram of a code relationship graph according to an embodiment of this application;
FIG. 3B is a diagram of a code relationship graph according to an embodiment of this application;
FIG. 4 is a diagram of a structure of a code completion model according to an embodiment of this application;
FIG. 5 is a flowchart of a code completion solution according to an embodiment of this application;
FIG. 6 is a diagram of a structure of an IDE according to an embodiment of this application;
FIG. 7A is a diagram of a structure of an IDE according to an embodiment of this application;
FIG. 7B is a flowchart of a code completion model training solution according to an embodiment of this application;
FIG. 7C is a flowchart of a code completion solution according to an embodiment of this application;
FIG. 8 is a flowchart of a code completion method according to an embodiment of this application;
FIG. 9 is a flowchart of a method for training a neural network according to an embodiment of this application;
FIG. 10 is a diagram of a structure of an apparatus for performing code completion via a neural network according to an embodiment of this application;
FIG. 11 is a diagram of a structure of an apparatus for training a neural network according to an embodiment of this application;
FIG. 12 is a diagram of a structure of a computing device according to an embodiment of this application; and
FIG. 13 is a diagram of a structure of a computing device according to an embodiment of this application.

### DESCRIPTION OF EMBODIMENTS

The following describes technical solutions of embodiments in this application with reference to accompanying drawings. It is clear that the described embodiments are merely some but not all of embodiments of this application.

In the descriptions of this specification, "an embodiment", "some embodiments", or the like indicates that one or more embodiments of this specification include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In the descriptions of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this specification, "a plurality of" means two or more than two.

In the descriptions of this specification, the terms "first" and "second" are merely intended for description, and shall not be understood as an indication or implication of relative importance or implicit indication of a quantity of indicated technical features. Therefore, a feature limited by "first" or "second" may explicitly or implicitly include one or more features. The terms "include", "have", and their variants all mean "include but are not limited to", unless otherwise specifically emphasized in another manner.

With development of deep learning and success of a deep learning model in the natural language processing field, code completion based on the deep learning model has become a hot research direction. The deep learning model is used to understand a code context of to-be-completed code, and predict the to-be-completed code based on an understanding result. This reduces an amount of code manually input by a programmer and improves software development efficiency.

In a solution, a code context of to-be-completed code is parsed into a one-dimensional text sequence, for example, a token (token) sequence. Then, deep learning is used to understand code semantics of the code context based on the text sequence, and learn semantic association between the code context and the to-be-completed code. Further, the to-be-completed code is predicted based on the semantic association. **In** this solution, semantic association between different code is learned only based on the code semantics depicted by the text sequence, and structural information between the different code is ignored. Therefore, accuracy of semantic association between code learned in this solution is low. Consequently, accuracy of the predicted to-be-completed code is also low.

In addition, a deep learning model used in this solution has a large quantity of parameters that is more than 100 million. To deploy the deep learning model on a code editor side, technologies such as knowledge distillation need to be used to compress the model, which further reduces prediction accuracy of the model.

Embodiments of this application provide a solution for performing code completion via a neural network. A code relationship graph may be used to represent a code context of to-be-completed code and the to-be-completed code. The code relationship graph fuses a plurality of types of information such as a code sequence of code and a structure relationship between different code. In the neural network, the code relationship graph may be used to depict association semantics between different code from a plurality of perspectives, so that a code sequence of the to-be-completed code may be predicted based on the association semantics. This solution improves prediction accuracy of the to-be-completed code.

The following specifically describes the code completion solution provided in embodiments of this application.

First, terms that may be used in embodiments of this application are described.

A token (token) is a "name" used by a programmer during programming, and is specifically a minimum unit of code obtained after word segmentation, including a keyword, a variable name, a method name, an operator, a symbol, and the like.

A token sequence is a sequence including a plurality of tokens in a specific sequence. The token sequence is a representation of a code sequence.

A to-be-completed location is a location in which code needs to be input in a code edit box but the code has not been input. The to-be-completed location may be obtained by detecting a location of a cursor in the code edit box. Generally, the location of the cursor in the code edit box is the to-be-completed location.

To-be-completed code is code that needs to be input in a to-be-completed location. The to-be-completed code may be a token (token) or a token sequence.

Code completion is predicting or recommending to-be-completed code required by a to-be-completed location.

A code context is context code of a to-be-completed location or to-be-completed code, and may specifically be code at locations before and after the to-be-completed location, or code at a location before the to-be-completed location, or code at a location after the to-be-completed location.

A function (function) is a program or code that can be directly referenced by another program or code to implement one or more functions. One function includes a plurality of statements.

A control flow indicates that there is execution sequence association between different statements in a same function.

A data flow indicates that there is data dependency association between different statements in a same function.

An abstract syntax tree (abstract syntax tree, AST) is an abstract syntax structure of code, and is represented as a tree shape. In other words, the abstract syntax tree represents a syntax structure of a function in a form of a tree, and each node in the tree represents a structure of the function.

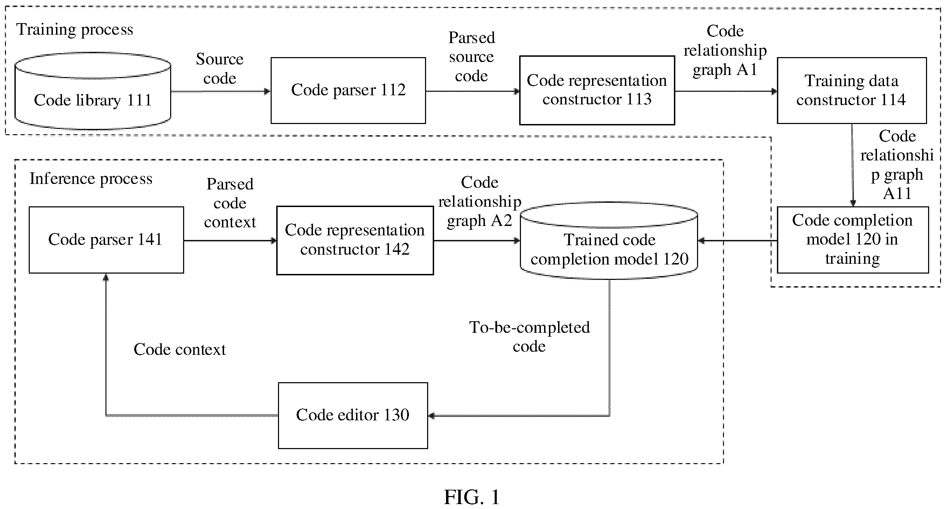

Second, a system architecture to which the code completion solution provided in embodiments of this application may be applied is described. As shown in FIG. 1, the system architecture may include a code library 111 for training a code completion model 120; a code parser 112, a code representation constructor 113, and a training data constructor 114 that are for the code completion model; and a code parser 141 and a code representation constructor 142 that are for completing code for a code editor 130.

The code parser 112, the code representation constructor 113, and the training data constructor 114 that are for the code completion model, and the code parser 141 and the code representation constructor 142 are functional modules having a data processing capability. In some embodiments, the code parser 112, the code representation constructor 113, and the training data constructor 114 that are for the code completion model, and the code parser 141 or the code representation constructor 142 may be implemented in a software manner. For example, the code parser 112, the code representation constructor 113, and the training data constructor 114 that are for the code completion model, and the code parser 141 or the code representation constructor 142 may be processes (processes) or virtual compute instances. The virtual compute instance may be a virtual machine (virtual machine, VM) or a container (container). Specific implementations of these functional modules are not limited in embodiments of this application.

The code completion model 120 is a deep-learning-based neural network. A specific structure of the code completion model 120 is described below. Details are not described herein.

The code editor 130 is a tool for a user (for example, a programmer) to input and edit code. For example, the code editor 130 may be integrated into an IDE, or may be implemented independently. The code editor 130 may provide a code edit box for the user, so that the user can input or edit code in the code edit box.

With reference to the system architecture shown in FIG. 1, the following describes, by using an example, the code completion solution provided in embodiments of this application. The code completion solution may be divided into a training process and an inference process of the code completion model 120.

First, the training process of the code completion model 120 is described.

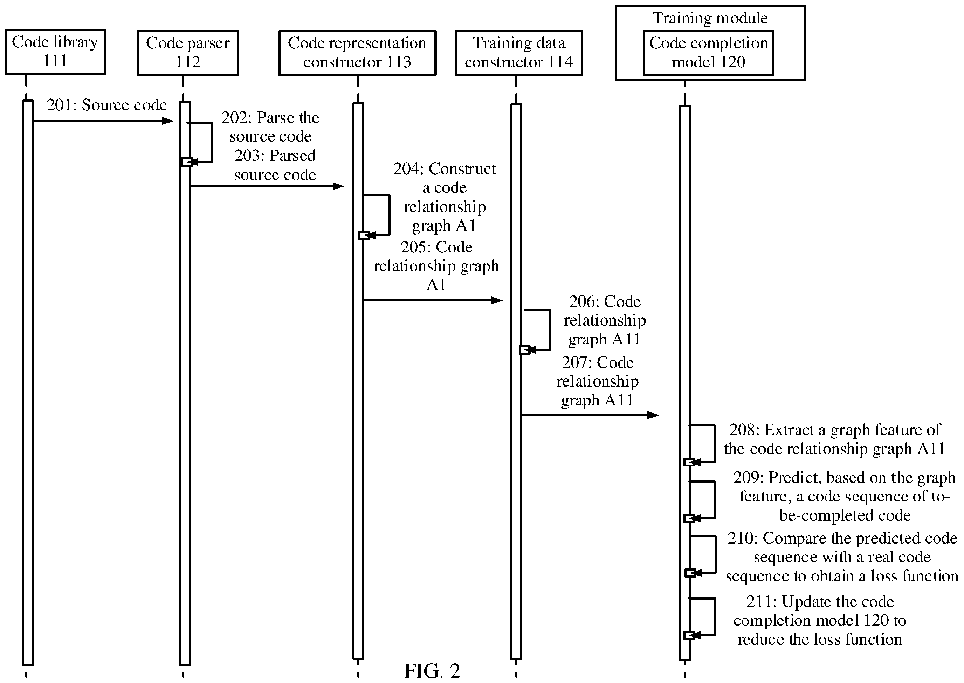

Refer to FIG. 2. The code parser 112 may perform step 201, and may obtain source code from the code library 111. The obtained source code may include at least one function. In some embodiments, source code of at least one file may be obtained from the code library 111, and source code of one file may include at least one function. In an example, the source code may be code written in a Python language. In another example, the source code may be code written in a TypeScript language. In still another example, the source code may be code written in a Java language. The foregoing provides descriptions only by using an example of a manner of obtaining the source code from the code library 111 and an example of a language of the source code, and does not constitute a limitation. In another example, the source code may be obtained from the code library 111 in another manner, or the source code may be code written in another language. Details are not described herein.

The code parser 112 may perform step 202 to parse the source code. In some embodiments, the source code obtained from the code library 111 includes the code of the at least one file. In this case, source code in each file may be parsed into an abstract syntax tree in a unit of file. Source code of one file may include at least one function. After the source code is parsed into the abstract syntax tree, an abstract syntax tree corresponding to each function may be extracted. In this way, source code parsing is completed.

The code parser 112 may perform step 203 to send the parsed source code to the code representation constructor 113. The code representation constructor 113 may perform step 204 to construct a code relationship graph based on the parsed source code. The code relationship graph may be constructed in a unit of function, that is, a function may be constructed as a code relationship graph. Specifically, program analysis may be performed, based on the abstract syntax tree corresponding to the function, on a plurality of statements included in the function. Program analysis includes statement type parsing and flow relationship analysis. A flow relationship includes a control flow and a data flow. A flow relationship between two nodes may be a control flow or a data flow, or may be a control flow and a data flow. The control flow indicates that there is direct control flow association between the two nodes. The data flow indicates that there is direct data flow association between the two nodes. The control flow and the data flow indicate that there is direct control flow association between the two nodes and there is direct data flow association between the two nodes. Flow relationship analysis is to analyze whether a control flow or/or a data flow exists between two statements. After program analysis, the code relationship graph including nodes and a connection edge is constructed.

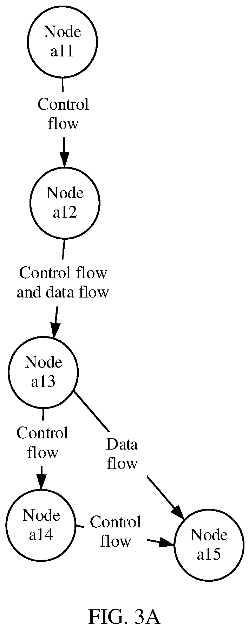

Refer to FIG. 3A. A code relationship graph A1 constructed based on a function A is used as an example. The code relationship graph A1 includes a plurality of nodes, for example, a node a11, a node a12, a node a13, a node a14, and a node a15. Each node corresponds to a statement in the function A. In an example, when a length of a code sequence of a statement exceeds a threshold Y1, the statement may be divided into at least two sub-statements, where each sub-statement corresponds to one node. There is an appended control flow between nodes corresponding to adjacent sub-statements in the at least two sub-statements. The appended control flow belongs to the control flow, and represents an execution sequence between the at least two sub-statements.

The node in the code relationship graph A1 has a label. The label is information about the node, and includes a feature of the node. Specifically, the label of the node includes a code sequence of a statement corresponding to the node. In some embodiments, the code sequence may be represented by a token sequence. Word segmentation may be performed on the code sequence of the statement, to obtain the token sequence of the statement. In some embodiments, a user-defined word segmentation method may be used to perform word segmentation on the statement, to obtain the token sequence of the statement. In some embodiments, a bpe word segmentation method may be used to perform word segmentation on the statement, to obtain the token sequence of the statement. In some embodiments, a user-defined word segmentation method and a bpe word segmentation method may be used to perform word segmentation on the statement, to obtain the token sequence of the statement. Specifically, first, an original token sequence of a code statement is segmented according to a space to obtain a segmented initial token sequence; second, the segmented initial token sequence is segmented according to a punctuation mark to obtain a secondary segmented token sequence; finally, the secondary segmented token sequence is segmented according to a camel case naming method, a snake naming method, and a number to obtain a thrice-segmented token sequence; and the thrice-segmented token sequence is segmented according to the bpe word segmentation method to obtain a final word segmentation result. The final word segmentation result may be used as the label of the corresponding node.

In some embodiments, the label of the node in the code relationship graph A1 further includes a type of the statement corresponding to the node in an abstract syntax tree.

Still refer to FIG. 3A. There is a connection edge between nodes having a flow relationship, and a label of the connection edge is the flow relationship between the nodes. For example, if there is a control flow between the node a11 and the node a12, a label of a connection edge between the node a11 and the node a12 is the control flow. For another example, if there is a data flow and a control flow between the node a12 and the node a13, a label of a connection edge between the node a12 and the node a13 is the data flow and the control flow.

In some embodiments, for control structure statements such as a select statement, a loop statement, and an exception handling statement, a Condition node, a Then node, a Body node, an OutControl node, and the like are added as placeholder nodes to represent structure information of the control structure statements. The placeholder nodes are added to the code relationship graph representation in sequence as child nodes of a control node. The control node is a node corresponding to the control structure statement. A child node of the Condition node is a condition of the control structure statement, a child node of the Then node and/or the Body node is code in a structure body of the control structure statement, and a child node of the OutControl node is code outside the structure body of the control structure statement.

In some embodiments, the node in the code relationship graph may further include text information of the statement corresponding to the node. In some embodiments, the text information of the statement may include at least one of a class name, a method name, a parameter name, and a variable name of the statement. The class name is a name of a class to which the statement belongs, the method name is a name of a function to which the statement belongs, the parameter name is a name of a parameter in the statement, and the variable name is a name of a variable in the statement. These names include semantics of the statement, and are used as text information to extract text semantic features of the statement, so as to depict the semantics of the statement. This can improve prediction accuracy of to-be-completed code.

In this way, the code relationship graph integrates a plurality of types of information such as different code sequences and a structural relationship between different statements, so that the code relationship graph may be used to depict association semantics between different code from a plurality of perspectives in a subsequent step.

Still refer to FIG. 2. The training data constructor 114 may obtain the code relationship graph A1 from the code representation constructor 113 by using step 205, and perform step 206 to generate a code relationship graph A11. The code relationship graph A11 is training data, and is used to train the code completion model 120. Specifically, in step 206, a part of nodes in the code relationship graph A1 may be removed. A code sequence of the removed node may be used as a ground truth (ground truth), and is used to subsequently perform supervised training on the code completion model 120. A hole (hole) node is added at a location in which the node is removed. The hole node represents or corresponds to the to-be-completed code. The code sequence of the removed node is a real code sequence of the hole node. A label of the hole node is set to a preset label. For ease of description, the preset label may be referred to as a hole label. The hole label may be understood as a placeholder label, and does not include a code sequence or a statement type. In some embodiments, the hole label may be a preset quantity of placeholders, for example, 20 placeholders, 15 placeholders, 10 placeholders, or 5 placeholders.

After the node is removed, a connection edge between a node that has a flow relationship with the removed node and the hole node is created. The connection edge represents a special flow. The special flow is a flow with an unknown flow relationship. The connection edge representing the special flow has a preset label. For ease of description, the preset label may be referred to as a special flow label. The special flow label may be understood as a placeholder label. In some embodiments, the special flow label may be a preset quantity of placeholders, for example, 10 placeholders, 5 placeholders, or 2 placeholders.

In some embodiments, the code relationship graph A11 may be constructed in the following manner.

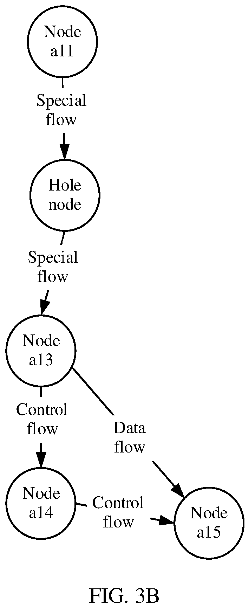

First, traversal is performed iteratively starting from child nodes of a root node of the code relationship graph A1, and several subsequent nodes that have control flow association with a currently traversed node are removed (a self-defined threshold range of the several nodes is 1 to a total quantity of nodes minus 1). The nodes are removed based on the control flow association to ensure syntax correctness of a code structure. Second, all edges associated with all the removed nodes are removed. Third, each of the removed nodes is replaced with a hole node, and a type of a connection edge between the hole node and a node connected to the hole node is changed to a special flow. It is set that the node a12 is removed from the code relationship graph A1, so that a code relationship graph A11 shown in FIG. 3B may be obtained. In the code relationship graph in which the node a12 is located, the node a12 may be replaced with a hole node, a connection edge between the hole node and the node A11 represents a special flow, and a connection edge between the hole node and the node a13 represents a special flow.

A code sequence of a first node in the removed nodes may be used as a ground truth (ground truth), and training data used for supervised training may be obtained, that is, the code relationship graph A11. To be specific, the first node in the removed nodes is replaced with a hole node, then a code sequence of the hole node is predicted, and the predicted code sequence is compared with the code sequence of the first node in the removed nodes, to obtain a prediction loss. The prediction loss may also be referred to as a loss function. Therefore, the code completion model 120 may be updated to reduce the prediction loss, to train the code completion model 120.

In some embodiments, text information of statements corresponding to unremoved nodes may be summarized and deduplicated, to obtain text information of the code relationship graph A11. As described above, the text information of the statement includes at least one of a class name, a method name, a parameter name, a variable name, and the like of the statement. If the class name, the method name, the parameter name, and the variable name of the statement are not distinguished, the class name, the method name, the parameter name, and the variable name may be briefly referred to as words or text words. Correspondingly, the text information of the code relationship graph A11 may also be referred to as a word bag or a text word bag of the code relationship graph A11.

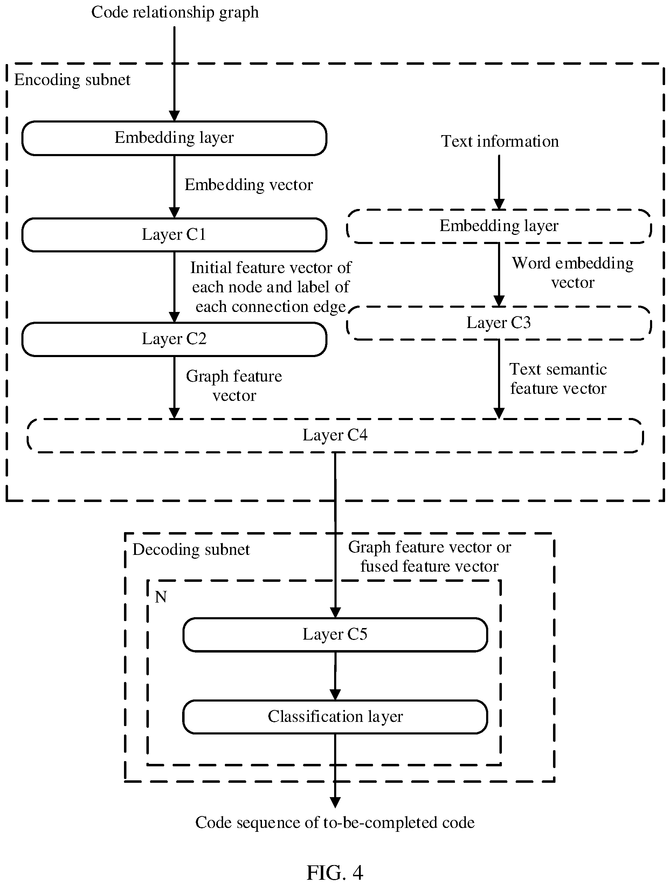

As shown in FIG. 4, the code completion model 120 may include an encoding subnet and a decoding subnet. The encoding subnet is used to extract a graph feature of the code relationship graph, and the decoding subnet is used to predict a code sequence of the to-be-completed code based on the graph feature of the code relationship graph. The following separately describes the encoding subnet and the decoding subnet.

The code completion model 120 may be trained by a training module. In some embodiments, the training module may be a physical device, for example, a server. In some embodiments, the training module may be a virtual compute instance. A specific implementation form of the training module is not limited in embodiments of this application.

The training module may perform step 207 to obtain the code relationship graph A11 from the training data constructor 114, and input the code relationship graph A11 into the code completion model 120. The training module may perform step 208 in the encoding subnet to extract a graph feature of the code relationship graph A11. The graph feature may be represented by using a feature vector. In step 208, a graph feature vector of the code relationship graph may be obtained based on a label of each node and a label of each connection edge in the code relationship graph. As shown in FIG. 4, the encoding subnet includes an embedding layer. At the embedding layer, graph embedding may be performed on the code relationship graph to obtain embedding vectors. The obtained embedding vector may include an embedding vector of the label of the node. Then, the graph feature vector of the code relationship graph may be extracted based on the embedding vector.

In some embodiments, in the encoding subnet, feature vectors of the nodes and feature vectors of the connection edges are obtained based on the labels of the nodes and the labels of the connection edges in the code relationship graph. Then, the feature vectors of the nodes and the feature vectors of the connection edges are fused into the feature vector of the code relationship graph. In some embodiments, fusing may be implemented through one or more of summation, averaging, maximum pooling, and an attention mechanism.

In an illustrative example of this embodiment, as shown in FIG. 4, the encoding subnet may include a layer C1 and a layer C2. At the layer C1, an initial feature vector of each node may be obtained based on the label of the node in the code relationship graph. Then, each obtained initial feature vector is input into the layer C2. At the layer C2, an initial feature vector of each connection edge may be obtained based on the label of the connection edge in the code relationship graph. At the layer C2, feature vectors of nodes connected to the connection edge may be obtained based on the initial feature vector of the connection edge and initial feature vectors of the nodes connected to the connection edge. Then, a feature vector of the connection edge may be obtained based on the feature vectors of the nodes connected to two ends of the connection edge and the initial feature vector of the connection edge.

In some embodiments, a structure of the layer C1 may be a recurrent neural network (recurrent neural network, RNN). In an example, the structure of the layer C1 may be any one of a conventional RNN, a long short-term memory (long short-term memory, LSTM) network, a gated recurrent unit (gated recurrent unit, GRU), and the like. In another example, the structure of the layer C1 may be a recurrent neural network in another form.

In some embodiments, a structure of the layer C2 may be a graph neural network (graph neural network, GNN). In an example, the structure of the layer C2 may be any one of a gated graph neural network (gated graph neural network, GGNN), a graph attention network (Graph attention network, GAT), a graph convolutional network (graph convolutional network, GCN), and the like. In another example, the structure of the layer C2 may be a graph neural network in another form.

In some embodiments, as shown in FIG. 4, the encoding subnet further includes a layer C3. As described above, the node in the code relationship graph may further include text information of the statement corresponding to the node. The text information of the code relationship graph may be input into the layer C3. Specifically, embedding may be performed on each text word in the text information to obtain a word embedding vector, and the word embedding vector is input into the layer C3. At the layer C3, a word feature vector may be obtained based on each word embedding vector. Then, word feature vectors of the words in the text information are fused to obtain a text semantic feature vector of the graph. In some embodiments, fusing may be implemented through one or more of summation, averaging, maximum pooling, and an attention mechanism.

At a layer C4 of the encoding subnet, the text semantic feature vector of the code relationship graph and the graph feature vector of the code relationship graph are fused, to obtain a fused feature vector of the code relationship graph. Fusing may be implemented through one or more of splicing, summation, and full connection.

Next, the graph feature vector of the code relationship graph or the fused feature vector of the code relationship graph may be input into the decoding subnet. Step 209 may be performed in the decoding subnet to predict the code sequence of the to-be-completed code based on the graph feature. Specifically, the code sequence of the to-be-completed code may be predicted based on the graph feature vector of the code relationship graph or the fused feature vector of the code relationship graph. Details are as follows:
As shown in FIG. 4, the decoding subnet may include a classification layer. At the classification layer, the code sequence of the to-be-completed code may be predicted based on the graph feature vector of the code relationship graph or the fused feature vector of the code relationship graph. In some embodiments, at the classification layer, the code sequence of the to-be-completed code in the code relationship graph may be predicted based on the graph feature vector of the code relationship graph or the fused feature vector of the code relationship graph according to a softmax mechanism.

In some embodiments, as shown in FIG. 4, a data input side of the classification layer further includes a layer C5. At the layer C5, association semantics between the nodes in the code relationship graph may be further learned from the graph feature vector of the code relationship graph or the fused feature vector of the code relationship graph, and a learning result is transferred to the classification layer, so that the classification layer can predict the code sequence of the to-be-completed code based on the learning result. This improves prediction accuracy.

In some embodiments, as shown in FIG. 4, the decoding subnet may include N layer sets, and each layer set includes a layer C5 and a classification layer. N is an integer greater than or equal to 1. The N layer sets are expanded in a time sequence. C5 in a layer set may further learn, from the graph feature vector of the code relationship graph or the fused feature vector of the code relationship graph, or a prediction result output by a classification layer of a previous layer set, the association semantics between the nodes in the code relationship graph, and transfer a learning result to the classification layer, so that the classification layer can predict the code sequence of the to-be-completed code based on the learning result. This improves prediction accuracy.

In some embodiments, the layer C5 is a recurrent neural network. In an example, a structure of the layer C5 may be any one of an RNN, an LSTM, a GRU, and the like. In another example, a structure of the layer C5 may be a recurrent neural network in another form.

The training module may perform step 210 to compare the predicted code sequence of the to-be-completed code with a ground truth of a hole node corresponding to the to-be-completed code, to obtain a loss function. Then, in step 211, the training module trains the code completion model 120 to reduce the loss function. The predicted code sequence of the to-be-completed code may also be referred to as a prediction code sequence of the to-be-completed code, and the ground truth of the hole node corresponding to the to-be-completed code is a real code sequence of the to-be-completed code.

In some embodiments, the code completion model 120 is a small- and medium-sized deep learning model, and a quantity of parameters of the code completion model 120 is less than 100 million.

The foregoing describes the training process of the code completion model 120 by using the example. Next, the inference process of the code completion model 120 is described.

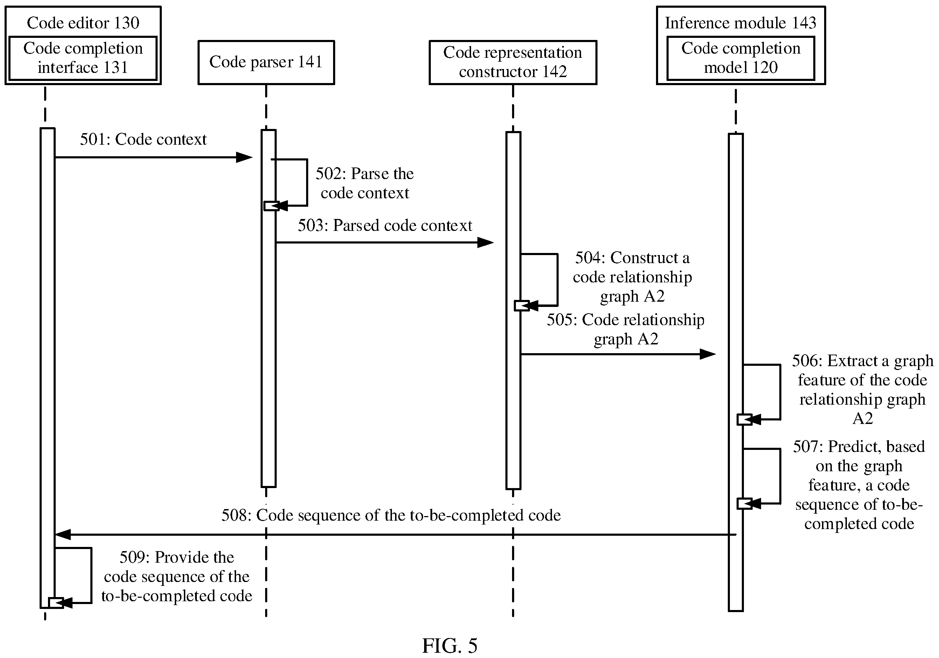

Refer to FIG. 5. The code parser 141 may perform step 501 to obtain a code context from the code editor 130. The code context is a code context of to-be-completed code, that is, a code context of a to-be-completed location. As described above, the code relationship graph as training data is constructed in a unit of function. Therefore, the obtained code context of the to-be-completed code belongs to a same function, and correspondingly, the to-be-completed code and the code context also belong to the same function.

The code editor 130 may provide a code edit box. The code edit box is used to input and edit code. A location of a cursor in the code edit box is a location in which the code is to be currently input or edited. Therefore, the location of the cursor in the code edit box may be detected, and the detected location is used as the to-be-completed location. Code that needs to be input at the to-be-completed location is the to-be-completed code.

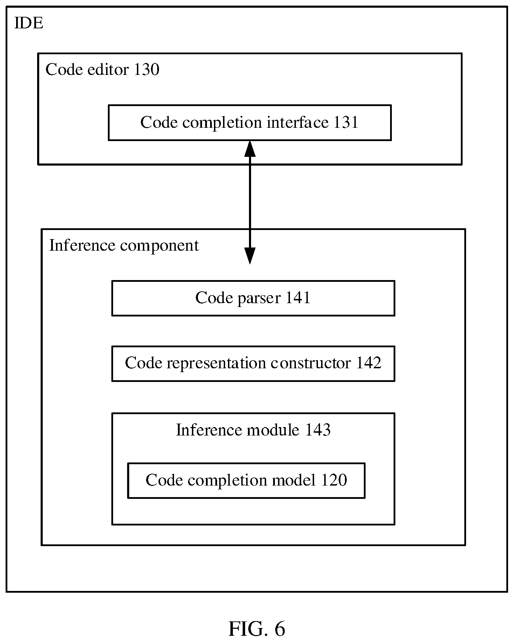

In some embodiments, refer to FIG. 6. A code completion interface 131 may be configured in the code editor 130. The code completion interface 131 is configured to detect the location of the cursor in the code edit box to obtain the to-be-completed location, and further obtain the code context of the to-be-completed code. The code completion interface 131 may send the code context to the code parser 141. The code completion interface may further provide (for example, display) a predicted sequence of the to-be-completed code, receive a selection operation of a user, and input, based on the selection operation of the user, the predicted sequence of the to-be-completed code to the to-be-completed location, to complete code completion.

In some embodiments, as shown in FIG. 6, the code parser 141 may be integrated into an IDE in which the code editor 130 is located, for example, loaded into the IDE in a form of a plug-in. That is, the code parser 141 may be disposed locally in the code editor 130.

The code parser 141 may perform step 502 to parse the code context. Specifically, a function in which the code context is located may be parsed into an abstract syntax tree.

The code parser 141 may perform step 503 to send the parsed code context to the code representation constructor 142. The code representation constructor 142 may perform step 504 to construct a code relationship graph A2 based on the parsed code context. Specifically, program analysis may be performed, based on the abstract syntax tree corresponding to the function, on a statement included in the code context. When a user develops code, a function header of a function needs be input. Therefore, the code context includes at least a function header of the function in which the code context is located. The function header of the function is a statement, and therefore the code context includes at least one statement. Of course, the code context may alternatively include more statements. A quantity of statements included in the code context may be determined by a quantity of statements input in the code edit box.

Program analysis performed on the statement includes statement type parsing and flow relationship analysis. A flow relationship includes a control flow and a data flow. A flow relationship between two nodes may be a control flow or a data flow, or may be a control flow and a data flow. The control flow indicates that there is direct control flow association between the two nodes. The data flow indicates that there is direct data flow association between the two nodes. The control flow and the data flow indicate that there is direct control flow association between the two nodes and there is direct data flow association between the two nodes. Flow relationship analysis is to analyze whether a control flow or/or a data flow exists between two statements.

After program analysis, a code relationship graph including at least one node is constructed. The at least one node corresponds to the code context. When there are a plurality of statements in the code context, the at least one node may include a plurality of nodes. Each of the plurality of nodes corresponds to one of the plurality of statements, and different statements correspond to different nodes. In addition, there is a connection edge between nodes that have a flow relationship in the plurality of nodes, and a label of the connection edge is the flow relationship. In other words, the label of the connection edge is a flow relationship between two nodes connected to the connection edge. The flow relationship may be a control flow and/or a data flow. In other words, the flow relationship may be selected from the control flow and the data flow. A specific flow relationship between two nodes is determined by analyzing the flow relationship between the two nodes.

A label of the at least one node (that is, a node corresponding to the code context) includes a code sequence of the code context. One node in the at least one node corresponds to one statement in the code context, and a label of the node includes a code sequence of the statement corresponding to the node. In some embodiments, the code sequence may be represented by a token sequence. Word segmentation may be performed on the statement or the code sequence of the code context to obtain the token sequence of the statement. For details, refer to the foregoing description of step 204 for implementation. Details are not described herein again.

In some embodiments, the at least one node (that is, the node corresponding to the code context) may further include a type of the corresponding code context in the abstract syntax tree. Specifically, a label of each node in the at least one node further includes a type, in the abstract syntax tree, of a statement corresponding to the node. The abstract syntax tree is an abstract syntax tree of the function to which the code context belongs. For details, refer to the foregoing description of the code relationship graph A1. Details are not described herein again.

In some embodiments, the at least one node (that is, the node corresponding to the code context) may further include text information of the code context. One node in the at least one node corresponds to one statement in the code context, and the node may further include text information of the statement corresponding to the node. In some embodiments, the text information of the statement may include at least one of a class name, a method name, a parameter name, and a variable name of the statement. The class name is a name of a class to which the statement belongs, the method name is a name of a function to which the statement belongs, the parameter name is a name of a parameter in the statement, and the variable name is a name of a variable in the statement. These names include semantics of the statement, and are used as text information to extract text semantic features of the statement, so as to depict the semantics of the statement. This can improve prediction accuracy of the to-be-completed code.

In step 504, the to-be-completed location may be used as a hole node and added to the code relationship graph, to obtain the code relationship graph A2. The hole node represents or corresponds to the to-be-completed code. A label of the hole node is set to a hole label. For the hole label, refer to the foregoing description of the hole label for implementation. Details are not described herein again.

It may be set that the at least one node includes a node B1, and a connection edge **B11** between the hole node and the at least one node (that is, the node corresponding to the code context) may be constructed, that is, the code relationship graph A2 includes the connection edge B11 between the hole node and the node B1. The connection edge B11 represents a special flow, and a label of the connection edge B11 is a special flow label. For the special flow label, refer to the foregoing description of the special flow label for implementation. Details are not described herein again.

A location of a statement corresponding to the node B1 is adjacent to a location of the to-be-completed code. In other words, the location of the statement corresponding to the node B1 is adjacent to the to-be-completed location. The location is a location in the code edit box. In some embodiments, the location of the statement corresponding to the node B1 is adjacent to the to-be-completed location, and is located before the to-be-completed location. In some embodiments, the location of the statement corresponding to the node B1 is adjacent to the to-be-completed location, and is located after the to-be-completed location. In some embodiments, the node B1 may include two nodes. A statement corresponding to one of the two nodes is adjacent to the to-be-completed location and is located before the to-be-completed location, and a statement corresponding to the other node is adjacent to the to-be-completed location and is located after the to-be-completed location. When the node B1 includes two nodes, a connection edge exists between one of the two nodes and a hole node, and a connection edge exists between the other node and the hole node. In addition, each of the two connection edges has a special flow label.

After the foregoing step, the code representation constructor 142 may perform step 505 to send the code relationship graph A2 to an inference module 143. The inference module 143 may also be referred to as a model inference service. The inference module 143 is configured with a code completion model 120. The code completion model 120 herein is a model trained according to the training solution shown in FIG. 2.

In some embodiments, the inference module 143 may be implemented in a software manner. For example, the inference module 143 may be a process (process) or a virtual compute instance. The virtual compute instance may be a virtual machine. Specific implementations of these functional modules are not limited in embodiments of this application.

In some embodiments, as shown in FIG. 6, the code parser 141, the code representation constructor 142, and the inference module 143 may be configured in the IDE in which the code editor 120 is located as IDE components. As described above, the code completion model 120 is a small- and medium-sized model, and a parameter quantity of the code completion model 120 is less than 100 million. Therefore, the code completion model 120 may be configured in the inference module 143 without being compressed. In this way, prediction accuracy of the code completion model 120 can be ensured.

The inference module 143 may execute the code completion solution via the code completion model 120, that is, predict a code sequence of a hole node in the code relationship graph A2.

The following describes the code completion solution in detail with reference to FIG. 4 and FIG. 5.

As shown in FIG. 4, the code completion model 120 may include an encoding subnet and a decoding subnet. The encoding subnet is used to extract a graph feature of the code relationship graph, and the decoding subnet is used to predict a code sequence of the to-be-completed code based on the graph feature of the code relationship graph. The following separately describes the encoding subnet and the decoding subnet.

As shown in FIG. 5, the inference module 143 may perform step 506 to extract a graph feature of the code relationship graph A2 via the code completion model 120. Specifically, the inference module 143 may input the code relationship graph A2 into the code completion model 120. Step 506 is performed in the encoding subnet of the code completion model 120 to extract the graph feature of the code relationship graph A2. The graph feature may be represented by using a feature vector. In step 506, a graph feature vector of the code relationship graph may be obtained based on a label of each node and a label of each connection edge in the code relationship graph A2. As shown in FIG. 4, the encoding subnet includes an embedding layer. At the embedding layer, graph embedding may be performed on the code relationship graph A2 to obtain embedding vectors. The obtained embedding vector may include an embedding vector of the label of the node. Then, the graph feature vector of the code relationship graph may be extracted based on the embedding vector.

In some embodiments, in the encoding subnet, feature vectors of the nodes and feature vectors of the connection edges are obtained based on the labels of the nodes and the labels of the connection edges in the code relationship graph A2. Then, the feature vectors of the nodes and the feature vectors of the connection edges are fused into the feature vector of the code relationship graph. In some embodiments, fusing may be implemented through one or more of summation, averaging, maximum pooling, and an attention mechanism.

In an illustrative example of this embodiment, as shown in FIG. 4, the encoding subnet may include a layer C1 and a layer C2. At the layer C1, an initial feature vector of each node may be obtained based on the label of the node in the code relationship graph A2. Then, the initial feature vector of each node is input into the layer C2. The label of the connection edge may be input to the layer C2 through the layer C1. At the layer C2, an initial feature vector of each connection edge may be obtained based on the label of the connection edge in the code relationship graph. At the layer C2, feature vectors of nodes connected to the connection edge may be obtained based on the initial feature vector of the connection edge and initial feature vectors of the nodes connected to the connection edge. Then, a feature vector of the connection edge may be obtained based on the feature vectors of the nodes connected to two ends of the connection edge and the initial feature vector of the connection edge.

In some embodiments, a structure of the layer C1 may be a recurrent neural network. In an example, the structure of the layer C1 may be any one of a conventional RNN, an LSTM, a GRU, and the like. In another example, the structure of the layer C1 may be a recurrent neural network in another form.

In some embodiments, a structure of the layer C2 may be a graph neural network. In an example, the structure of the layer C2 may be any one of a GGNN, a GAT, a GCN, and the like. In another example, the structure of the layer C2 may be a graph neural network in another form.

In some embodiments, as shown in FIG. 4, the encoding subnet further includes a layer C3. As described above, the node in the code relationship graph A2 may further include text information of the statement corresponding to the node. The text information of the code relationship graph A2 may be input into the layer C3. Specifically, embedding may be performed on each text word in the text information to obtain a word embedding vector, and the word embedding vector is input into the layer C3. At the layer C3, a word feature vector may be obtained based on each word embedding vector. Then, word feature vectors of the words in the text information are fused to obtain a text semantic feature vector of the code relationship graph A2. In some embodiments, fusing may be implemented through one or more of summation, averaging, maximum pooling, and an attention mechanism.

At a layer C4 of the encoding subnet, the text semantic feature vector of the code relationship graph A2 and the graph feature vector of the code relationship graph A2 are fused, to obtain a fused feature vector of the code relationship graph A2. Fusing may be implemented through one or more of splicing, summation, and full connection.

Next, the graph feature vector of the code relationship graph A2 or the fused feature vector of the code relationship graph A2 may be input into the decoding subnet. The inference module 142 may perform step 507 in the decoding subnet to predict, based on the graph feature of the code relationship graph, the code sequence of the to-be-completed code. Specifically, the code sequence of the to-be-completed code may be predicted based on the graph feature vector of the code relationship graph A2 or the fused feature vector of the code relationship graph. Details are as follows:
As shown in FIG. 4, the decoding subnet may include a classification layer. At the classification layer, the code sequence of the to-be-completed code may be predicted based on the graph feature vector of the code relationship graph A2 or the fused feature vector of the code relationship graph A2. In some embodiments, at the classification layer, the code sequence of the to-be-completed code in the code relationship graph may be predicted based on the graph feature vector of the code relationship graph A2 or the fused feature vector of the code relationship graph according to a softmax mechanism.

In some embodiments, as shown in FIG. 4, a data input side of the classification layer further includes a layer C5. At the layer C5, association semantics between the nodes in the code relationship graph may be further learned from the graph feature vector of the code relationship graph A2 or the fused feature vector of the code relationship graph A2, and a learning result is transferred to the classification layer, so that the classification layer can predict the code sequence of the to-be-completed code based on the learning result. This improves prediction accuracy.

In some embodiments, as shown in FIG. 4, the decoding subnet may include N layer sets, and each layer set includes a layer C5 and a classification layer. N is an integer greater than or equal to 1. The N layer sets are expanded in a time sequence. C5 in a layer set may further learn, from the graph feature vector of the code relationship graph A2 or the fused feature vector of the code relationship graph A2, or a prediction result output by a classification layer of a previous layer set, the association semantics between the nodes in the code relationship graph, and transfer a learning result to the classification layer, so that the classification layer can predict the code sequence of the to-be-completed code based on the learning result. This improves prediction accuracy.

In some embodiments, the layer C5 is a recurrent neural network. In an example, a structure of the layer C5 may be any one of an RNN, an LSTM, a GRU, and the like. In another example, a structure of the layer C5 may be a recurrent neural network in another form.

In this way, after step 507, the code sequence of the to-be-completed code may be predicted.

**In** some embodiments, the inference module 143 may further perform step 508 to send the predicted code sequence of the to-be-completed code to the code editor 130.

In some embodiments, at step 507, the decoding subnet may predict a plurality of code sequences, and the plurality of code sequences have different probabilities. The probability of the code sequence is a possibility that the code sequence is a correct code sequence of the to-be-completed code. The inference module 143 may sort the plurality of code sequences based on the probabilities of the plurality of code sequences, to obtain a sorting result. For example, the inference module 143 may sort the plurality of code sequences based on the probabilities of the plurality of code sequences according to a beam search (beam search) algorithm, to obtain the sorting result. **In** step 508, the inference module 143 may send the sorting result to 508.

The code editor 130 may perform step 509 to provide the predicted code sequence of the to-be-completed code. **In** some embodiments, the code editor 130 may display the predicted code sequence of the to-be-completed code at or near the to-be-completed location in the code edit box, so that the user selects or confirms the predicted code sequence of the to-be-completed code. In an example, the predicted code sequence of the to-be-completed code may include a plurality of code sequences, and the code editor 130 may display the plurality of code sequences in a drop-down list, so that the user selects the code sequence from the plurality of code sequences. The code sequence selected by the user is used as a final code sequence or a correct code sequence of the to-be-completed code.

In the code completion solution provided in embodiments of this application, a plurality of types of information such as a code sequence of code, a structure relationship (that is, a flow relationship) between different code, and text semantic information, are used to depict association semantics between code. In addition, in embodiments of this application, the multi-unit information is fused in the code relationship graph, and the graph feature of the code relationship graph is extracted, so that features of the plurality of types of information is fused. Then, the code sequence of to-be-completed code is predicted based on a fused feature. This improves prediction accuracy.

In addition, the code completion model trained in embodiments of this application is a small- and medium-sized model, and may be deployed on a code editor side without model compression. This further ensures prediction accuracy.

Next, in Embodiment 1, the solution provided in embodiments of this application is described by using an example in which the source code is the code written in the Python language. Details are as follows:
**In** a PyCharm IDE, after a user inputs a character in a function (that is, a compiled Python function) of a code editor in the PyCharm, a Python code token completion action is triggered. A computing resource of a local machine of the user is used to call a model to perform an inference service, and a result is finally returned to the user.

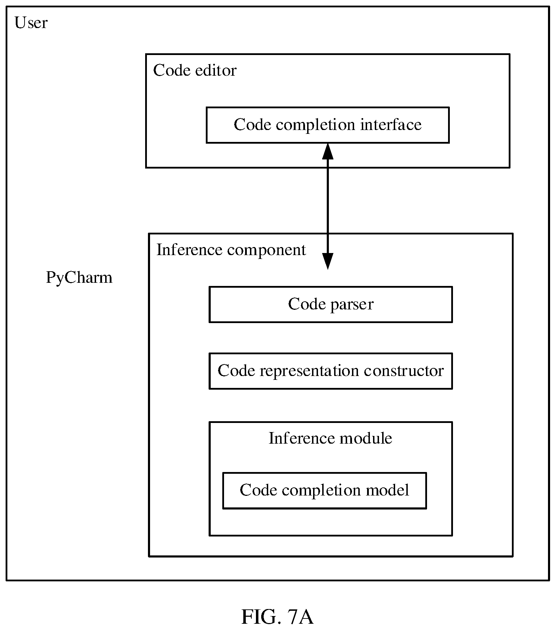

FIG. 7A shows a structural diagram of components according to Embodiment 1. **In** the PyCharm, modules in this embodiment include a code token completion entry, a Python PSI, a Python code representation constructor, and a Python model inference service. The code token completion entry may also be referred to as a code completion interface, the Python PSI may also be referred to as a code parser, the Python code representation constructor may also be referred to as a code representation constructor, and the Python model inference service may also be referred to as an inference apparatus.

In this embodiment, to implement a Python code token completion function in the PyCharm, a specific implementation procedure of a training phase is shown in 7B, and specific implementation steps are as follows:
1: Obtain Python-language-related projects with 1000 or more stars from GitHub as a code library.
2: Parse source code into an AST (PsiFile) through the Python PSI: The PsiFile of the source code in the code library in a unit of file is obtained through parsing according to a PsiFileFactory.getInstance(project).createFileFromText method in the Python PSI provided in the PyCharm. After obtaining the PsiFile, all children of the PsiFile are traversed and all PyClasses and PyFunctions are reserved.
3: Based on the PsiFile, construct a code relationship graph and text information through program analysis: (1) For the PyClass, a class name is reserved, and an original token (denoted as a token1) of the class name is segmented according to a space; second, the token1 is segmented according to a punctuation mark and a segmented token is denoted as a token2; then, the token2 is segmented according to a camel-case naming method, a snake naming method, and a number, and a segmented token is denoted as a token3; and finally, word segmentation is performed on the token3 according to a bpe word segmentation method. A same word segmentation operation is performed on a function name and a parameter name of the PyFunction. Then, all atomic tokens obtained after word segmentation are deduplicated to form a text representation. (2) For the PyFunction, each statement in the PyFunction is traversed by inheriting PyElementVisitor. Visit functions of different types of statements in the PyElementVisitor are rewritten to parse the different types of statements. For example, visitPyCallExpression is used to parse a function call statement in Python. When all the statements are parsed in sequence, an edge of a control flow is connected between each statement and each of nodes represented by statements before and after the statement. The node corresponding to each statement stores a type of the statement as a type label, and stores a token sequence obtained by performing word segmentation on the statement as a token label. If a length of the token sequence exceeds a threshold (for example, the threshold is 20), the node is split into a plurality of child nodes (that is, the length of the token sequence is divided by the threshold) and the plurality of child nodes are connected in sequence. There is an edge of an appended control flow between every two nodes. If a statement that is being parsed is a declaration or assignment statement, a variable is recorded and statements that use the variable are determined. In this case, an edge of a data flow is generated between the statement that uses the variable and a node in which the variable is located. If an edge of a control flow already exists, a type of the edge is changed to the control flow and a data flow. For a control node, a structured placeholder is generated. For example, for a while statement, a while node is generated first, and a Condition node, a Body node, and an OutControl node are used as three child nodes of the while node to represent different branches of the while node. Then, code in each branch is parsed. After all the statements are parsed, a fully connected code relationship graph is obtained.
4: Construct training data based on the obtained code relationship graph. For details, refer to the foregoing description of step 206 in FIG. 2 for implementation.
5: Based on the training data obtained through construction, use TensorFlow to design a code completion model and train the model. A GRU is selected at an RNN series layer, a gated graph neural network is selected for a GNN, and a sum operation is selected at an aggregation layer. A learning rate of the model is set to 0.005, and an optimizer is set to Momentum. In an encoder, an embedding size is set to 300, a hidden size is set to 300, and a quantity of layers in the GRU is set to 3. In a decoder, an embedding size is set to 300, a hidden size is set to 600, and a quantity of layers in the GRU is set to 3.

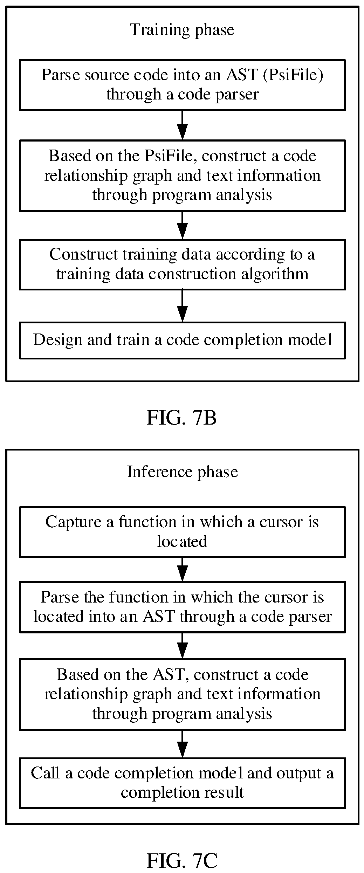

In this embodiment, to implement the Python code token completion function in the PyCharm, a specific implementation procedure of an inference phase is shown in FIG. 7C, and specific implementation steps are as follows:
1: Inherit a com.intellij.codeInsight.completion.CompletionContributor class, rewrite a fillCompletion Variants function, and register the fillCompletionVariants function in extensions of plugin.xml to serve as a Python code token completion entry. (corresponding to the code completion interface in FIG. 7A).
2: Capture a function in which a cursor is located: editor.getCaretModel().getOffset() is first used to obtain an offset offset of a location of the cursor, then a psiFile.getElementAt function is used to obtain an element corresponding to the offset, and finally a PsiTreeUtil.getParentOfType function is used to obtain the function PyFunction in which the cursor is located. (corresponding to the code parser in FIG. 7A).
3: Parse the function in which the cursor is located into an AST through the Python PSI: The PyFunction is expanded to obtain an AST of the PyFunction, to obtain a PyClass to which the PyFunction belongs. (corresponding to the code parser in FIG. 7A).
4: Based on the AST, construct a code relationship graph and text information through program analysis: Based on the PyClass and the PyFunction, the code relationship graph and the text information are obtained by using steps (1) and (2) in step 3 of the training phase. Then, a corresponding hole node is added to the location of the cursor in the code relationship graph. (corresponding to the code representation constructor in FIG. 7A).
5: Call the code completion model and perform inference in combination with a beam search (beam search) algorithm, and output a completion result: The code relationship graph and the text information that are obtained in step 4 are input into a trained small- and medium-sized model, and inference results are sorted based on probabilities (an inference result with a high probability is reserved, and an inference result with a low probability is filtered out) according to the beam search algorithm. Finally, the inference results are loaded to a drop-down list and displayed to the user. (corresponding to the inference apparatus in FIG. 7A).

According to the solution in Embodiment 1, prediction accuracy of to-be-completed Python code can be improved.

Next, in Embodiment 2, the solution provided in embodiments of this application is described by using an example in which the source code is the code written in the TypeScript language. Details are as follows:
After a user inputs a character in a function (that is, a compiled TypeScript function) of a code editor, a TypeScript code token completion action is triggered. A computing resource of a local machine of the user is used to call a model to perform an inference service, and a result is finally returned to the user.

A component structure in Embodiment 2 may also be shown in FIG. 7A. Modules in this embodiment include a code token completion entry, a TypeScript PSI, a TypeScript code representation constructor, and a TypeScript model inference service. The code token completion entry may also be referred to as a code completion interface, the TypeScript PSI may also be referred to as a code parser, the TypeScript code representation constructor may also be referred to as a code representation constructor, and the TypeScript model inference service may also be referred to as an inference apparatus.

In this embodiment, to implement a TypeScript code token completion function, for a specific implementation procedure of a training phase, still refer to the solution shown in FIG. 7B. Specific implementation steps of the training phase are basically the same as the specific implementation steps of the training phase in Embodiment 1, and differences lie in that:
1: Obtain TypeScript-language-related projects with 1000 or more stars from GitHub as a code library.
2: Use the TypeScript PSI: The PyClass is replaced with a Class corresponding to TypeScript, and the PyFunction is replaced with a Function corresponding to TypeScript.
3: Inherit JavaScriptVisitor to parse a code relationship graph and a text representation.

In this embodiment, to implement the TypeScript code token completion function, for a specific implementation procedure of an inference phase, still refer to the solution shown in FIG. 7C. Specific implementation steps of the inference phase are basically the same as the specific implementation steps of the training phase in Embodiment 1, and differences lie in that:
1: Use the TypeScript PSI: The PyClass is replaced with a Class corresponding to TypeScript, and the PyFunction is replaced with a Function corresponding to TypeScript.
2: Use the TypeScript model to perform the inference service.

According to the solution in Embodiment 2, prediction accuracy of to-be-completed TypeScript code can be improved.

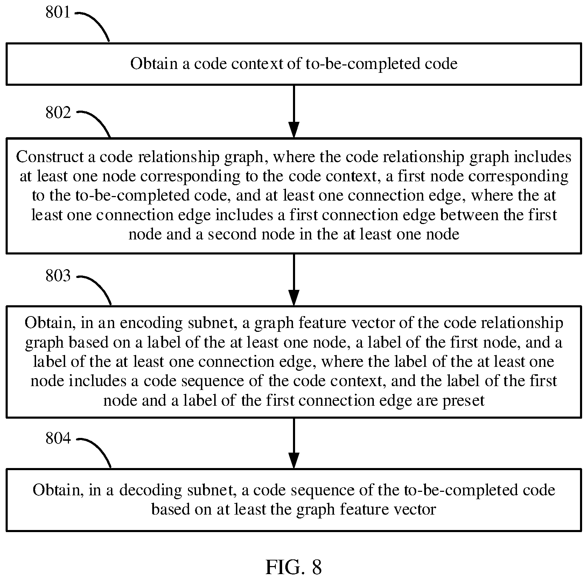

Based on the code completion solution described above, an embodiment of this application provides a method for performing code completion via a neural network. The neural network includes an encoding subnet and a decoding subnet. As shown in FIG. 8, the method includes the following steps.

Step 801: Obtain a code context of to-be-completed code. For details, refer to the foregoing description of step 501 in FIG. 5 for implementation. Details are not described herein again.

Step 802: Construct a code relationship graph, where the code relationship graph includes at least one node corresponding to the code context, a first node corresponding to the to-be-completed code, and at least one connection edge, where the at least one connection edge includes a first connection edge between the first node and a second node in the at least one node. For details, refer to the foregoing description of step 504 in FIG. 5 for implementation. Details are not described herein again.

Step 803: Obtain, in the encoding subnet, a graph feature vector of the code relationship graph based on a label of the at least one node, a label of the first node, and a label of the at least one connection edge, where the label of the at least one node includes a code sequence of the code context, and the label of the first node and a label of the first connection edge are preset. For details, refer to the foregoing description of 506 in FIG. 5 for implementation. Details are not described herein again.

Step 804: Obtain, in the decoding subnet, a code sequence of the to-be-completed code based on at least the graph feature vector. For details, refer to the foregoing description of 507 in FIG. 5 for implementation. Details are not described herein again.

**In** some embodiments, the at least one connection edge further includes a second connection edge, the second connection edge is connected to a third node and a fourth node in the at least one node, a label of the second connection edge is a flow relationship between the third node and the fourth node, and the flow relationship is a control flow and/or a data flow. For details, refer to the foregoing description of step 504 in FIG. 5 for implementation. Details are not described herein again.

In some embodiments, the obtaining a graph feature vector of the code relationship graph based on a label of the at least one node, a label of the first node, and a label of the at least one connection edge includes: obtaining a feature vector of the at least one node, a feature vector of the first node, and a feature vector of the at least one connection edge based on the label of the at least one node, the label of the first node, and the label of the at least one connection edge; and fusing the feature vector of the at least one node, the feature vector of the first node, and the feature vector of the at least one connection edge into the graph feature vector. For details, refer to the foregoing description of 506 in FIG. 5 for implementation. Details are not described herein again.

In an example of this embodiment, the obtaining a feature vector of the at least one node, a feature vector of the first node, and a feature vector of the at least one connection edge based on the label of the at least one node, the label of the first node, and the label of the at least one connection edge includes: obtaining an initial feature vector of the first node based on the label of the first node; obtaining an initial feature vector of the second node based on a label of the second node; and obtaining an initial feature vector of the first connection edge based on the label of the first connection edge; obtaining the feature vector of the first node based on the initial feature vector of the first node and the initial feature vector of the first connection edge, and obtaining a feature vector of the second node based on the initial feature vector of the second node and the initial feature vector of the first connection edge; and obtaining a feature vector of the first connection edge based on the feature vector of the first node, the feature vector of the second node, and the initial feature vector of the first connection edge. For details, refer to the foregoing description of 506 in FIG. 5 for implementation. Details are not described herein again.

In an example of this example, the encoding subnet includes a first layer and a second layer, the initial feature vector of the first node and the initial feature vector of the second node are obtained at the first layer, and the initial feature vector of the first connection edge, the feature vector of the first node, the feature vector of the second node, and the feature vector of the first connection edge are obtained at the second layer. For details, refer to the foregoing description of the code completion model shown in FIG. 4 for implementation. Details are not described herein again.

In some embodiments, the label of the at least one node further includes a type of the code context in an abstract syntax tree. For details, refer to the foregoing description of step 504 in FIG. 5 for implementation. Details are not described herein again.

**In** some embodiments, the encoding subnet further includes a third layer; the method further includes: obtaining, at the third layer, a text semantic feature vector of the code context based on text information of the code context, where the text information includes at least one of a method name, a parameter name, a variable name, and a class name in the code context; and the obtaining a code sequence of the to-be-completed code based on at least the graph feature vector includes: obtaining the code sequence of the to-be-completed code based on a feature vector obtained by fusing the graph feature vector and the text semantic feature vector.

In some embodiments, a location of code corresponding to the second node is adjacent to a location of the to-be-completed code.

In some embodiments, the code sequence is a token sequence of code.

In some embodiments, a quantity of parameters of the neural network is less than 100 million. For details, refer to the foregoing description of the code completion model shown in FIG. 4 for implementation.

According to the code completion method provided in this embodiment of this application, the code sequence of the code context and structure information between the code context and the code completion code can be fused into the code relationship graph. **In** the neural network, the code sequence and structure information between code are further fused to obtain a graph feature of the code relationship graph, so as to depict association semantics between the code context and the to-be-completed code from a plurality of perspectives. The code sequence of the to-be-completed code is predicted based on the graph feature of the code relationship graph. This can improve prediction accuracy of the to-be-completed code.

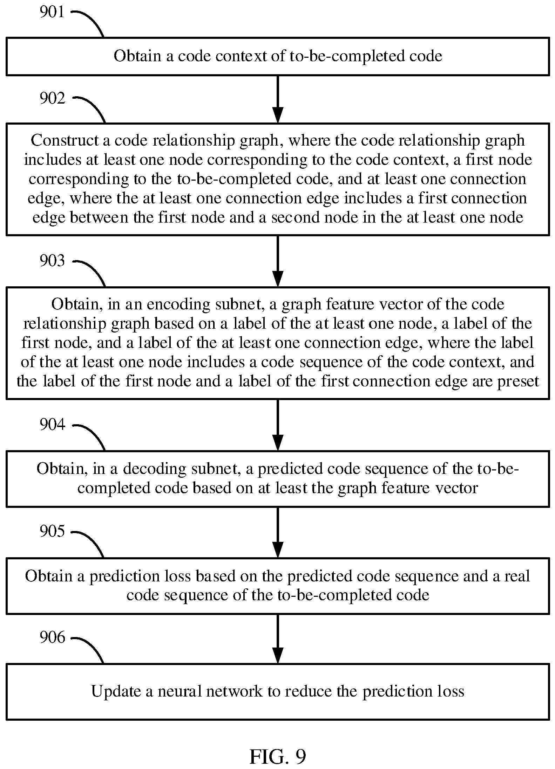

Based on the code completion model training solution described above, an embodiment of this application provides a method for training a neural network. The neural network includes an encoding subnet and a decoding subnet. As shown in FIG. 9, the method includes the following steps.

Step 901: Obtain a code context of to-be-completed code. For details, refer to the foregoing description of step 201 in FIG. 2 for implementation.

Step 902: Construct a code relationship graph, where the code relationship graph includes at least one node corresponding to the code context, a first node corresponding to the to-be-completed code, and at least one connection edge, where the at least one connection edge includes a first connection edge between the first node and a second node in the at least one node. For details, refer to the foregoing description of step 204 in FIG. 2 for implementation.

Step 903: Obtain, in the encoding subnet, a graph feature vector of the code relationship graph based on a label of the at least one node, a label of the first node, and a label of the at least one connection edge, where the label of the at least one node includes a code sequence of the code context, and the label of the first node and a label of the first connection edge are preset. For details, refer to the foregoing description of step 208 in FIG. 2 for implementation.

Step 904: Obtain, in the decoding subnet, a predicted code sequence of the to-be-completed code based on at least the graph feature vector. For details, refer to the foregoing description of step 209 in FIG. 2 for implementation.

Step 905: Obtain a prediction loss based on the predicted code sequence and a real code sequence of the to-be-completed code. For details, refer to the foregoing description of step 210 in FIG. 2 for implementation.

Step 906: Update the neural network to reduce the prediction loss. For details, refer to the foregoing description of step 211 in FIG. 2 for implementation.

In some embodiments, a quantity of parameters of the neural network is less than 100 million.

According to the neural network trained according to the training method provided in this embodiment of this application, the code sequence of the code context and structure information between the code context and the code completion code can be fused into the code relationship graph. **In** the neural network, the code sequence and structure information between code are further fused to obtain a graph feature of the code relationship graph, so as to depict association semantics between the code context and the to-be-completed code from a plurality of perspectives. The code sequence of the to-be-completed code is predicted based on the graph feature of the code relationship graph. This can improve prediction accuracy of the to-be-completed code.

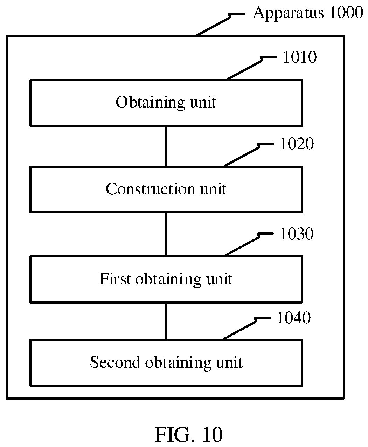

An embodiment of this application provides an apparatus 1000 for performing code completion via a neural network. The neural network includes an encoding subnet and a decoding subnet. As shown in FIG. 10, the apparatus 1000 includes:
an obtaining unit 1010, configured to obtain a code context of to-be-completed code;
a construction unit 1020, configured to construct a code relationship graph, where the code relationship graph includes at least one node corresponding to the code context, a first node corresponding to the to-be-completed code, and at least one connection edge, where the at least one connection edge includes a first connection edge between the first node and a second node in the at least one node;
a first obtaining unit 1030, configured to obtain, in the encoding subnet, a graph feature vector of the code relationship graph based on a label of the at least one node, a label of the first node, and a label of the at least one connection edge, where the label of the at least one node includes a code sequence of the code context, and the label of the first node and a label of the first connection edge are preset; and
a second obtaining unit 1040, configured to obtain, in the decoding subnet, a code sequence of the to-be-completed code based on at least the graph feature vector.

The functional units of the apparatus 1000 may be implemented with reference to the method embodiment shown in FIG. 5 or FIG. 8. Details are not described herein again.

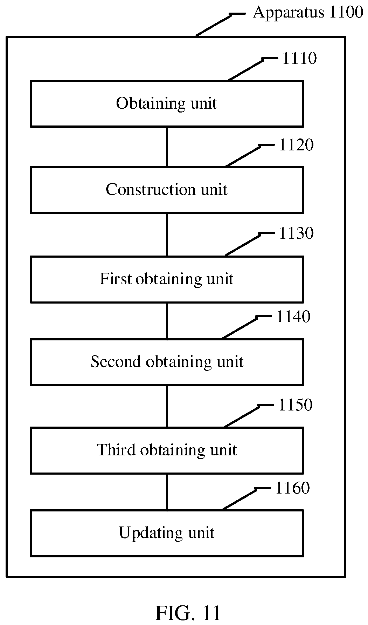

An embodiment of this application provides an apparatus 1100 for training a neural network. The neural network includes an encoding subnet and a decoding subnet. As shown in FIG. 11, the apparatus 1100 includes:
an obtaining unit 1110, configured to obtain a code context of to-be-completed code;
a construction unit 1120, configured to construct a code relationship graph, where the code relationship graph includes at least one node corresponding to the code context, a first node corresponding to the to-be-completed code, and at least one connection edge, where the at least one connection edge includes a first connection edge between the first node and a second node in the at least one node;
a first obtaining unit 1130, configured to obtain, in the encoding subnet, a graph feature vector of the code relationship graph based on a label of the at least one node, a label of the first node, and a label of the at least one connection edge, where the label of the at least one node includes a code sequence of the code context, and the label of the first node and a label of the first connection edge are preset;
a second obtaining unit 1140, configured to obtain, in the decoding subnet, a predicted code sequence of the to-be-completed code based on at least the graph feature vector;
a third obtaining unit 1150, configured to obtain a prediction loss based on the predicted code sequence and a real code sequence of the to-be-completed code; and
an updating unit 1160, configured to update the neural network to reduce the prediction loss.

The functional units of the apparatus 1100 may be implemented with reference to the method embodiment shown in FIG. 2. Details are not described herein again.

The apparatuses provided in embodiments of this application are mainly described above from a perspective of a method procedure. It may be understood that, to implement the foregoing functions, the terminals include corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

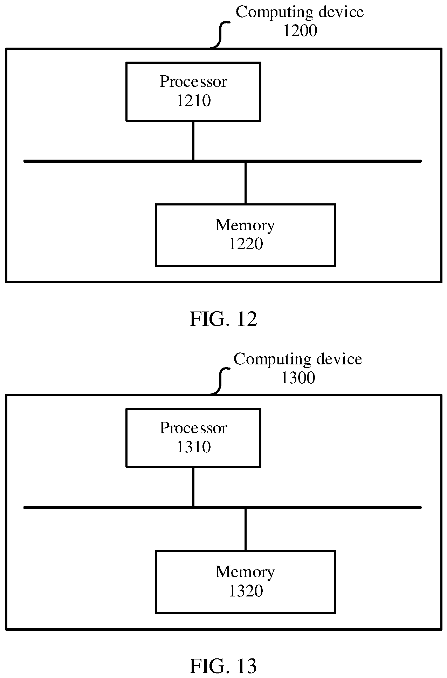

Refer to FIG. 12. An embodiment of this application provides a computing device 1200. The computing device 1200 may include a processor 1210 and a memory 1220. The memory 1220 stores instructions, and the instructions may be executed by the processor 1210. When the instructions are executed by the processor 1210, the computing device 1200 may perform the method embodiment shown in FIG. 5 or FIG. 8.

Refer to FIG. 13. An embodiment of this application provides a computing device 1300. The computing device 1300 may include a processor 1310 and a memory 1320. The memory 1320 stores instructions, and the instructions may be executed by the processor 1310. When the instructions are executed by the processor 1310, the computing device 1300 may perform the method embodiment shown in FIG. 2 or FIG. 9.

An embodiment of this application further provides a computer program product including instructions. The computer program product may be a software or program product that includes the instructions and that can run on a computing device or be stored in any usable medium. When the computer program product runs on the computing device, the computing device is enabled to perform the method shown in FIG. 8.

An embodiment of this application further provides a computer program product including instructions. The computer program product may be a software or program product that includes the instructions and that can run on a computing device or be stored in any usable medium. When the computer program product runs on the computing device, the computing device is enabled to perform the method shown in FIG. 9.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the method shown in FIG. 8.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the method shown in FIG. 9.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A method for performing code completion via a neural network, wherein the neural network comprises an encoding subnet and a decoding subnet, and the method comprises:
obtaining a code context of to-be-completed code;
constructing a code relationship graph, wherein the code relationship graph comprises at least one node corresponding to the code context, a first node corresponding to the to-be-completed code, and at least one connection edge, wherein the at least one connection edge comprises a first connection edge between the first node and a second node in the at least one node;
obtaining, in the encoding subnet, a graph feature vector of the code relationship graph based on a label of the at least one node, a label of the first node, and a label of the at least one connection edge, wherein the label of the at least one node comprises a code sequence of the code context, and the label of the first node and a label of the first connection edge are preset; and
obtaining, in the decoding subnet, a code sequence of the to-be-completed code based on at least the graph feature vector.

2. The method according to claim 1, wherein the at least one connection edge further comprises a second connection edge, the second connection edge is connected to a third node and a fourth node in the at least one node, a label of the second connection edge is a flow relationship between the third node and the fourth node, and the flow relationship is a control flow and/or a data flow.

3. The method according to claim 1 or 2, wherein the obtaining a graph feature vector of the code relationship graph based on a label of the at least one node, a label of the first node, and a label of the at least one connection edge comprises:
obtaining a feature vector of the at least one node, a feature vector of the first node, and a feature vector of the at least one connection edge based on the label of the at least one node, the label of the first node, and the label of the at least one connection edge; and
fusing the feature vector of the at least one node, the feature vector of the first node, and the feature vector of the at least one connection edge into the graph feature vector.

4. The method according to claim 3, wherein the obtaining a feature vector of the at least one node, a feature vector of the first node, and a feature vector of the at least one connection edge based on the label of the at least one node, the label of the first node, and the label of the at least one connection edge comprises:
obtaining an initial feature vector of the first node based on the label of the first node; obtaining an initial feature vector of the second node based on a label of the second node; and obtaining an initial feature vector of the first connection edge based on the label of the first connection edge;
obtaining the feature vector of the first node based on the initial feature vector of the first node and the initial feature vector of the first connection edge, and obtaining a feature vector of the second node based on the initial feature vector of the second node and the initial feature vector of the first connection edge; and
obtaining a feature vector of the first connection edge based on the feature vector of the first node, the feature vector of the second node, and the initial feature vector of the first connection edge.

5. The method according to claim 4, wherein the encoding subnet comprises a first layer and a second layer, the initial feature vector of the first node and the initial feature vector of the second node are obtained at the first layer, and the initial feature vector of the first connection edge, the feature vector of the first node, the feature vector of the second node, and the feature vector of the first connection edge are obtained at the second layer.

6. The method according to any one of claims 1 to 5, wherein the label of the at least one node further comprises a type of the code context in an abstract syntax tree.

7. The method according to any one of claims 1 to 6, wherein the encoding subnet further comprises a third layer;
the method further comprises: obtaining, at the third layer, a text semantic feature vector of the code context based on text information of the code context, wherein the text information comprises at least one of a method name, a parameter name, a variable name, and a class name in the code context; and
the obtaining a code sequence of the to-be-completed code based on at least the graph feature vector comprises: obtaining the code sequence of the to-be-completed code based on a feature vector obtained by fusing the graph feature vector and the text semantic feature vector.

8. The method according to any one of claims 1 to 7, wherein a location of code corresponding to the second node is adjacent to a location of the to-be-completed code.

9. The method according to any one of claims 1 to 8, wherein the code sequence is a token sequence of code.

10. A method for training a neural network, wherein the neural network comprises an encoding subnet and a decoding subnet, and the method comprises:
obtaining a code context of to-be-completed code;
constructing a code relationship graph, wherein the code relationship graph comprises at least one node corresponding to the code context, a first node corresponding to the to-be-completed code, and at least one connection edge, wherein the at least one connection edge comprises a first connection edge between the first node and a second node in the at least one node;
obtaining, in the encoding subnet, a graph feature vector of the code relationship graph based on a label of the at least one node, a label of the first node, and a label of the at least one connection edge, wherein the label of the at least one node comprises a code sequence of the code context, and the label of the first node and a label of the first connection edge are preset;
obtaining, in the decoding subnet, a predicted code sequence of the to-be-completed code based on at least the graph feature vector;
obtaining a prediction loss based on the predicted code sequence and a real code sequence of the to-be-completed code; and
updating the neural network to reduce the prediction loss.

11. The method according to claim 10, wherein a quantity of parameters of the neural network is less than 100 million.

12. An apparatus for performing code completion via a neural network, wherein the neural network comprises an encoding subnet and a decoding subnet, and the apparatus comprises:
an obtaining unit, configured to obtain a code context of to-be-completed code;
a construction unit, configured to construct a code relationship graph, wherein the code relationship graph comprises at least one node corresponding to the code context, a first node corresponding to the to-be-completed code, and at least one connection edge, wherein the at least one connection edge comprises a first connection edge between the first node and a second node in the at least one node;
a first obtaining unit, configured to obtain, in the encoding subnet, a graph feature vector of the code relationship graph based on a label of the at least one node, a label of the first node, and a label of the at least one connection edge, wherein the label of the at least one node comprises a code sequence of the code context, and the label of the first node and a label of the first connection edge are preset; and
a second obtaining unit, configured to obtain, in the decoding subnet, a code sequence of the to-be-completed code based on at least the graph feature vector.

13. An apparatus for training a neural network, wherein the neural network comprises an encoding subnet and a decoding subnet, and the apparatus comprises:
an obtaining unit, configured to obtain a code context of to-be-completed code;
a construction unit, configured to construct a code relationship graph, wherein the code relationship graph comprises at least one node corresponding to the code context, a first node corresponding to the to-be-completed code, and at least one connection edge, wherein the at least one connection edge comprises a first connection edge between the first node and a second node in the at least one node;
a first obtaining unit, configured to obtain, in the encoding subnet, a graph feature vector of the code relationship graph based on a label of the at least one node, a label of the first node, and a label of the at least one connection edge, wherein the label of the at least one node comprises a code sequence of the code context, and the label of the first node and a label of the first connection edge are preset;
a second obtaining unit, configured to obtain, in the decoding subnet, a predicted code sequence of the to-be-completed code based on at least the graph feature vector;
a third obtaining unit, configured to obtain a prediction loss based on the predicted code sequence and a real code sequence of the to-be-completed code; and
an updating unit, configured to update the neural network to reduce the prediction loss.

14. A computing device, comprising a processor and a memory, wherein the memory is configured to store a computer program, and the processor is configured to execute the computer program to implement the method according to any one of claims 1 to 10, or the method according to claim 11.

15. A computer storage medium, wherein the computer storage medium stores a computer program, and when the computer program is executed by a processor, the method according to any one of claims 1 to 10 or the method according to claim 11 is implemented.

16. A computer program product, comprising a program for implementing the method according to any one of claims 1 to 10 or the method according to claim 11.
